# EUROPÄISCHE PATENTANMELDUNG

(11) **EP 1 005 138 A1**
(43) Veröffentlichungstag der Anmeldung: **31.05.2000**
(21) Anmeldenummer: 99123609.2
(22) Anmeldetag: 26.11.1999
(51) Int. Cl.: H02K 5/22

(54) **Wasserdichte Abdeckung für die elektrischen Anschlüsse von Elektromotoren**

(30) Priorität: 28.11.1998 DE 29821302 U
(71) Anmelder: Otto Christ AG, 87734 Benningen (DE)
(72) Erfinder: Christ, Franz, D-87700 Memmingen (DE)
(74) Vertreter: Pfister, Helmut, Dipl.-Ing.

(57) **Zusammenfassung**

Die Erfindung betrifft eine wasserdichte Abdeckung für elektrische Anschlüsse an Elektromotoren mit einer Öffnung zum Herausführen eines Kabelstranges. Es wird als Befestigungselement eine in der Abdeckung zentrisch angeordnete Schraube vorgesehen, um eine möglichst schnelle und dichte Abdeckung zu erreichen.

## Beschreibung

Die Erfindung betrifft eine wasserdichte Abdeckung für die elektrischen Anschlüsse eines Elektromotors, mit einer Öffnung zum Herausführen eines Kabelstrangs und mit einem oder mehreren Befestigungselementen zum Befestigen an einem Motorgehäuse.

Bei den bisher verwendeten Elektromotoren, die in feuchter bzw. nasser Umgebung eingesetzt werden, werden die elektrischen Anschlüsse oftmals in einem vom Motorengehäuse getrennten Klemmkasten vorgenommen. Der Aufbau dieses Klemmkastens ist sehr aufwendig, da ein Grundkörper zunächst mit vier Schrauben auf dem Gehäuse befestigt wird. Zwischen Grundkörper und Gehäuse befindet sich eine erste Dichtung. Der Grundkörper wird durch einen Deckel verschlossen, wofür weitere Schrauben vorgesehen sind. Zwischen Deckel und dem Grundkörper befindet sich eine zweite Dichtung. Um eine hohe Zuverlässigkeit der Abdichtung der Abdeckung zu gewährleisten ist es bekannt, immer eine Mehrzahl von Schrauben, zum Beispiel vier oder noch mehr Schrauben, vorzusehen, die die Abdeckung bevorzugt am Rand mit dem Gehäuse verbinden. Es ist aber klar, daß die Schrauben mit entsprechenden Gewinden am Motorgehäuse zusammenwirken müssen, deren Herstellung verhältnismäßig aufwendig ist. Auch ist die Montage, nämlich das Befestigen der Vielzahl von Schrauben, zeitaufwendig.

Die Einsatzbereiche dieser Elektromotoren sind zum Beispiel in Waschanlagen, insbesondere für Fahrzeuge. Hierbei ist es wichtig, daß möglichst gut abgedichtete Gehäuse gerade bei den elektrischen Anschlüssen bestehen, um das Eindringen von Wasser und die daraus resultierenden Kurzschlußprobleme sicher zu vermeiden. Da die Elektromotoren in verschiedensten Einsatzbereichen eingesetzt werden, ist es gelegentlich notwendig, daß die elektrischen Anschlüsse je nach Einsatzort an verschiedenen Stellen, rechts oder links, oben oder unten, aus dem Motorgehäuse herauszuführen. Bei den bekannten, universell einsetzbaren Motoren ist die Abdeckplatte entweder mit mehreren Stutzen versehen, wobei die gerade nicht benötigten mit Stopfen dicht verschlossen werden müssen, oder es werden für die Motoren verschiedene Abdeckplatten mitgeliefert, die entsprechend aufgesetzt werden. Hieraus resultiert ein verhältnismäßig großer Aufwand, da unter Umständen eine Mehrzahl von Abdeckungen für einen Elektromotor herzustellen und gegebenenfalls mitzuliefern sind, die dann nicht benötigt werden. Dabei ist auch zu beachten, daß die zusätzlichen Stopfen abzudichten sind. Es besteht natürlich auch die Gefahr, daß an diesen Stopfen Wasser in den elektrischen Anschlußbereich eindringen kann.

Die Erfindung hat es sich zur Aufgabe gemacht, eine wasserdichte Abdeckung, wie eingangs beschrieben, dahingehend zu entwickeln, daß diese möglichst schnell und dabei möglichst dicht montierbar ist.

Gelöst wird diese Aufgabe durch eine wasserdichte Abdeckung, wie eingangs beschrieben, wobei vorgesehen wird, daß als Befestigungselement an der Abdeckung eine zentrisch angeordnete Schraube vorgesehen ist. Durch die erfindungsgemäße Ausgestaltung wird erreicht, daß mit nur einem Befestigungselement, welches zentral anzuordnen ist, die Abdeckung am Motorengehäuse befestigbar ist. Der Arbeitsaufwand für das Befestigen von nur einer Schraube ist sehr gering, wobei nicht nur ein geringer Montageaufwand zu beachten ist, sondern auch verhältnismäßig geringe Vorbereitungsmaßnahmen (Gewinde) im Motorgehäuse. Gleichzeitig wird durch die zentrale Anordnung des Befestigungsmittels eine gleichmäßige Verteilung der Anpreßkraft der Abdeckung an das Motorgehäuse erreicht, wobei diese Kraft für die Dichtwirkung entscheident ist. Die Abdeckung wird durch die zentrisch angeordnete Schraube am Umfang gleichmäßig auf die Dichtung aufgedrückt und abgedichtet.

Alternativ wird die Aufgabe aber auch dadurch gelöst, daß anstelle der Befestigungsschraube zentrisch wirkende Befestigungselemente vorgesehen sind. Als Befestigungselemente sind hierbei zum Beispiel Klemmringe oder Klemmlaschen vorgesehen, die zum Beispiel am Motorgehäuse oder an der Abdeckung fest angeordnet sind und mit periodisch am Umfang der Abdeckung oder Motorengehäuse verteilten Vorständen oder Rippen haltend zusammenwirken. Günstigerweise werden hierbei mehrere Befestigungselemente, ähnlich einem Bügelschnappverschluß, vorgesehen, um die Abdeckung gleichmäßig und dicht zu befestigen.

In einer Weiterentwicklung der Erfindung ist vorgesehen, daß die Abdeckung eine Spiegelsymmetrie, Mehrfachsymmetrie, Punktsymmetrie oder einen kreisrunden Querschnitt aufweist. Insbesondere eine Punktsymmetrie oder ein kreisrunder Querschnitt erlauben einen sehr variablen Einsatz der Abdeckung an dem Motorgehäuse, da eine im wesentlichen beliebig frei einstellbare Orientierung der Öffnung zum Herausführen des Kabelstranges an der Abdeckung möglich ist und es daher nicht mehr auf die genaue Einbaulage des Elektromotors ankommt, da der Kabelstrang, aufgrund der erfindungsgemäßen Ausgestaltung an der Abdeckung, optimal herausgeführt werden kann. Den erfindungsgemäßen Effekt nur einschränkend ausnützend ist eine Spiegelsymmetrie, zum Beispiel bezüglich einer einfachen Symmetrieachse oder eine Mehrfachsymmetrie, zum Beispiel wenn es sich um eine im wesentlichen Quadratische (und somit nicht runde) Abdeckung handelt, die um 90° gedreht, um zwei Symmetrieachsen spiegelsymmetrisch, angeordnet werden kann. Aber auch hier ist eine gewisse Freizügigkeit und somit Flexibilität in der Anordnung der Durchführungsöffnung des Kabelstranges möglich, wobei nach wie vor durch die zentrische Anordnung der Schraube ein dichter Verbund der Abdeckung auf dem Elektromotor möglich ist. Günstigerweise befindet sich natürlich die Schraube bei der Punktsymmetrie zum Beispiel in eben diesem Symmetriepunkt oder aber im Mittelpunkt des kreisrunden Querschnittes beziehungsweise im Schnittpunkt der verschiedenen Symmetrieachsen.

Durch die erfindungsgemäße Weiterentwicklung kann neben einer schnellen und dichten Abdeckung auch eine höchst variabel einsetzbare Abdeckung realisiert werden, wodurch insbesondere zum Beispiel bei der Konstruktion der Anlage mit einem solchen Elektromotor die genaue Lage des Elektromotors bezüglich der elektrischen Zuleitungskabel eine nicht mehr so wichtige Rolle spielt.

Die Öffnung zum Herausführen des Kabelstrangs ist azentrisch angeordnet. Dadurch ist es möglich, die Abdeckung so aufzusetzen, daß die Durchführung für den Kabelstrang immer an der richtigen Stelle platziert werden kann.

Die Durchführung für den Kabelstrang, der zu Dichtzwecken nochmals ummantelt sein mag, ist als ein an der Abdeckung angeformter Rohrstutzen ausgebildet. Die Anordnung des Rohrstutzens kann dabei derart getroffen sein, daß die Achse des Rohrstutzens im wesentlichen parallel zur Abdeckebene ist. Der Rohrstutzen kann hierbei zum Beispiel auch radial und zwar bezüglich des zentral angeordneten Befestigungselementes wie auch axial hierzu (und somit im wesentlichen rechtwinklig zur Abdeckebene) angeordnet sein. Die Anordnung des Rohrstutzens als Öffnung gibt gleichzeitig auch den Winkel des Kabelstranges bezüglich der Abdeckung vor und kann, entsprechend der gewünschten Zuführungsrichtung des Kabelstranges, optimiert werden. Er weist im gezeigten Ausführungsbeispiel ein Innenschraubgewinde auf, in das ein Dichtungsteil, das den Kabelstrang umfaßt, eingesetzt ist. Dieses Dichtungsteil weist an seinem von der Abdeckung abgewandten Ende federnde Laschen auf, die von einer Mutter, die darüber aufgesetzt ist, zusammengedrückt werden. Diese Laschen wiederum wirken auf ein Dichtungsring aus Gummimaterial, Silikon oder Kunststoff, der sich dann an den Kabelstrang anlegt und somit das Motorengehäuse nach außen hin abdichtet.

Hierbei ist es günstig, daß die Abdeckung als Kunststoffspritzteil ausgebildet ist, welches zum einen eine einfache und kostengünstige Herstellung gewährleistet und zum anderen durch die Wahl des Kunststoffes eine ausreichende Resistenz gegen Wasser, Spritzwasser oder auch mit Zusätzen versetzten Flüssigkeiten ergibt.

Die Erfindung ist dabei nicht nur auf die wasserdichte Abdeckung, wie vorbeschrieben, beschränkt, sondern erstreckt sich in gleicher Weise natürlich auf einen mit der wasserdichten Abdeckung ausgestatteten Elektromotor. Dabei ist erfindungsgemäß sowohl vorgesehen, daß das Motorgehäuse endseitig von der wasserdichten Abdeckung verschlossen wird oder aber ein an dem Motorgehäuse separat aufgesetztes Kabelgehäuse mit der Abdeckung verschließbar ist.

Dabei ist es insbesondere in Waschanlagen, insbesondere für Fahrzeuge wie LKW'S, Autos oder Schienenfahrzeuge von Vorteil, wenn vorbeschriebene Elektromotoren zum Einsatz kommen. Waschanlagen, zum Beispiel als Transferstraßen oder als Portalwaschanlagen ausgebildet, weisen eine Vielzahl von Elektromotoren für die unterschiedlichsten Einsatzzwecke auf. Die Elektromotoren dienen zum Beispiel als Antriebe für die Waschbürsten oder als Stellantriebe für Reinigungselemente. Diesen Elektromotoren ist allen gemein, daß diese mit mehr oder weniger Spritzwasser benetzt werden können. Durch die erfindungsgemäße Ausgestaltung ist es möglich, im wesentlichen nur mit einem Gehäusetyp, in welchem gegebenenfalls Motorenwicklungen für unterschiedliche Leistungen eingebracht werden können, zu verfahren, wodurch natürlich für die Herstellung der Motorengehäuse große Lose erreicht werden, wodurch die Produktion sehr günstig wird. Zum einen wird durch die erfindungsgemäße Ausgestaltung dabei eine schnelle und flexible Montage erreicht und gleichzeitig eine hohe Flexibilität für die Anordnung des Kabelstranges durch die Abdeckung ermöglicht.

Die Ausführung der erfindungsgemäßen Abdeckung wird im folgenden in den Figuren näher beschrieben. Es zeigen:
- Fig. 1: die Draufsicht auf einer Abdeckung;
- Fig. 2: die Seitenansicht der Abdeckung, geschnitten, mit den aufsetzbaren Dichtungselementen.

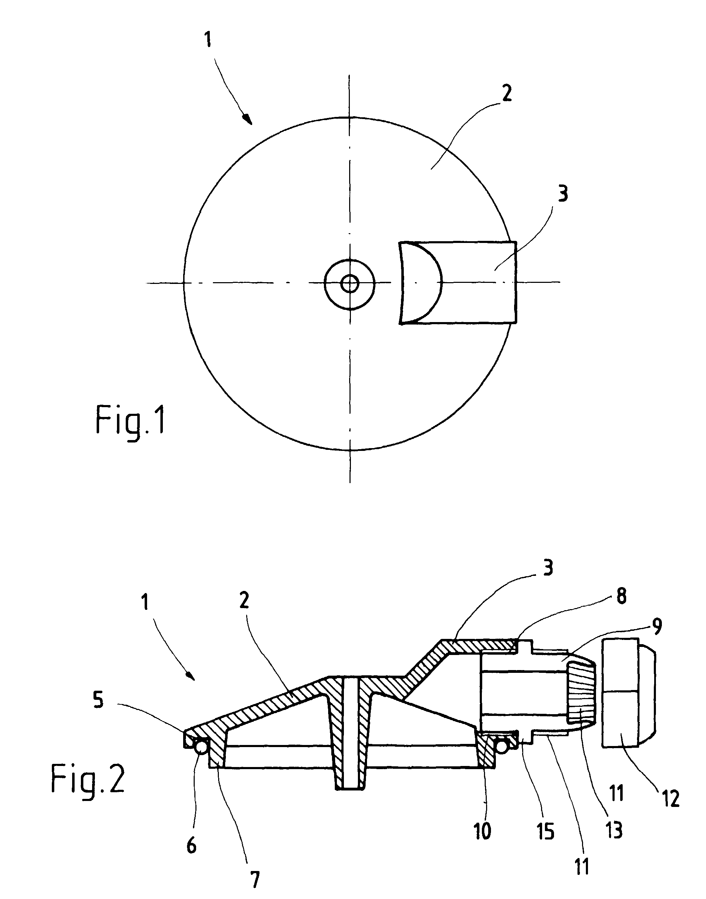

Wie in Figur 1 zu erkennen ist, besteht die erfindungsgemäße Abdeckung 1 aus einem zum Beispiel kreisrunden Kunststoffteil 2, dem azentrisch ein Rohrstutzen 3 zum Durchführen eines ummantelten Kabelstrangs angeformt ist. Im vorliegenden Beispiel ist die Öffnung radial ausgerichtet. Mittels einer zentrisch angeordneten Schraube wird die Abdeckung 1 an einem Motorengehäuse oder auch an einem anderen elektrischen Gerät wie einer Tauchpumpe, usw. befestigt. Dies hat den Vorteil, daß je nach Bedarf, die Öffnung des Stutzens 3 radial in alle Richtungen ausgerichtet werden kann. Auch ist die Montage der Abdeckung 1 recht schnell und einfach zu handhaben, denn ein Verkanten ist mit nur einer Befestigungsschraube fast nicht möglich. Die Abdeckung sitzt somit immer dicht auf dem Gehäuse.

Figur 2 zeigt die Seitenansicht der Abdeckung 1 im Schnitt. Auf der Unterseite weist die Abdeckung 1 eine Nut 5 auf, in die ein Dichtungsring 6 eingesetzt ist. Dieser besteht vorteilhafter Weise aus Gummi oder Silikon. Zur einfacheren Zentrierung der Abdeckung 1 auf dem Gehäuse ist ihr auf der Unterseite ein ringförmiger Wulst oder Flansch 7 angeformt, der ins Innere des Motorengehäuses paßt. Dieser Wulst 7 kann auch an dem äußeren Rand der Abdeckung 1 angeformt sein, um über das Gehäuse gestülpt zu werden. Ein paßgenauer und auch dichter Sitz ist somit immer gegeben.

Der angeformte Rohrstutzen 3 zur Durchführung des Kabelstrangs hat seine Öffnung rechtwinklig zur Befestigungsrichtung der Abdeckung 1. Es ist somit möglich das Kabel in jeder Richtung aus dem Gehäuse herauszuführen. Auf seiner Innenseite weist der Stutzen 3 ein Gewinde 8 auf, in das ein weiteres Teil 9 das zum Abdichten vorgesehen ist, eingesetzt werden kann. Dieses weitere Teil 9 ist zylinderförmig gestaltet und weist ein Gewinde 10 auf, mit dem man es in den Stutzen 3 einschrauben kann und ein weiteres Gewinde 11 über das eine Mutter 12 gesetzt wird. Die Mutter 12 hat die Aufgabe, die an dem Teil 9 angeformten Laschen 13 gegen einen Dichtungsring zu drücken, der sich wiederum zum Beispiel an den Kabelstrang anlegt. Das Gehäuse ist somit nach außen hin abgedichtet. Das zwischen beiden Gewindenteilen 10, 11 angeformte Teil 15 dient zum Ansetzen eines Werkzeugs. Die Mutter 12 und das Teil 9 bilden dabei eine Klemmdichtung.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Wasserdichte Abdeckung für die elektrischen Anschlüsse eines Elektromotors mit einer Öffnung zum Herausführen eines Kabelstrangs und einem oder mehreren Befestigungselementen, **dadurch gekennzeichnet, daß** an der Abdeckung (1) eine zentrisch angeordnete Befestigungsschraube oder zentrisch wirkende Befestigungselement vorgesehen ist/sind.

2. Wasserdichte Abdeckung nach Anspruch 1 , **dadurch ge kennzeichnet, daß** die Abdeckung (1) eine Spiegelsymmetrie, Mehrfachsymmetrie, Punktsymmetrie oder einen kreisrunden Querschnitt aufweist.

3. Wasserdichte Abdeckung nach einem oder beiden der vorhergehenden Ansprüche, **dadurch gekennzeichnet, daß** die Öffnung zum Herausführen des Kabelstranges azentrisch angeordnet ist.

4. Wasserdichte Abdeckungen nach einem oder mehreren der vorhergehenden Ansprüche, **dadurch gekennzeichnet, daß** die Abdeckung (1) einen in der Abdeckebene liegenden oder bezüglich des Befestigungselementes radial oder axial angeordneten Rohrstutzen (3) als Öffnung für den Kabel strang aufweist.

5. Wasserdichte Abdeckungen nach einem oder mehreren der vorhergehenden Ansprüche, **dadurch gekennzeichnet, daß** sie aus einem Kunststoffspritzteil gefertig ist.

6. Wasserdichte Abdeckungen nach einem oder mehreren der vorhergehenden Ansprüche, **dadurch gekennzeichnet, daß** die Abdeckung (1) am Rand eine Nut zur Aufnahme einer Dichtung (6) aufweist.

7. Wasserdichte Abdeckungen nach einem oder mehreren der vorhergehenden Ansprüche, **dadurch gekennzeichnet, daß** am Rand der Abdeckung (1) ein nach innen in das Motorgehäuse vorstehender Flansch (7) vorgesehen ist.

8. Wasserdichte Abdeckungen nach einem oder mehreren der vorhergehenden Ansprüche, **dadurch gekennzeichnet, daß** der aus der Öffnung herausgeführte Kabelstrang an der Öffnung abgedichtet, insbesondere durch eine Klemmdichtung (9, 12) abgedichtet ist.

9. Elektromotor, bestehend aus einem Motorengehäuse und einer wasserdichten Abdeckung nach einem oder mehreren der vorhergehenden Ansprüche.

10. Waschanlage, insbesondere für Fahrzeuge, in welcher mindestens ein Elektromotor nach Anspruch 9 vorgesehen ist.
